# EUROPÄISCHE PATENTSCHRIFT

(11) **EP 1 145 999 B1**
(45) Veröffentlichungstag und Bekanntmachung des Hinweises auf die Patenterteilung: **11.05.2005**
(21) Anmeldenummer: 01108279.9
(22) Anmeldetag: 02.04.2001
(51) Int. Cl.: B65G 69/18

(54) **Vorrichtung zum Umfüllen eines Behältnisses, sowie Behältnis und Deckel hierfür**
Device for filling a container, container and lid therefor
Dispositif de remplissage d' un récipient, récipient et couvercle correspodantes

(30) Priorität: 10.04.2000 AT 5992000
(43) Veröffentlichungstag der Anmeldung: 17.10.2001
(73) Patentinhaber: Anutec GmbH, 3186 Düdingen (CH)
(72) Erfinder: Erwin Schmidbauer, A-4040 Linz/Plesching (CH)
(74) Vertreter: Révy von Belvárd, Peter

(56) Entgegenhaltungen:
- EP-A- 0 045 163
- EP-A- 0 801 015
- EP-A- 0 847 946
- EP-A- 1 043 252
- DE-A- 4 415 488
- DE-A- 19 814 418
- FR-A- 2 640 598
- US-A- 5 775 544

## Beschreibung

Die Erfindung bezieht sich auf eine Vorrichtung nach dem Oberbegriff des Anspruches 1, auf ein Behältnis mit den Oberbegriffsmerkmalen des Anspruches 5 sowie auf einen Deckel für ein solches Behältnis gemäss Anspruch 9. Der Begriff "Behältnis" soll dabei im allgemeinsten Sinne verstanden werden, der Säcke, wie etwa Inliner oder Big-Bags; Container, wie Zwischenbehälter (IBC's), usw. umfassen kann. Unter "Umfüllen" sei sowohl das Befüllen des Behälters aus einem Aufnahmebereich, wie einem Silo, Container, Rohr od.dgl. verstanden, als auch das Entleeren des Behältnisses, wie eines Sackes, zur Zufuhr in einen Prozess, wie Reaktor, Mischer, Mühle usw. oder einfach in eine Rohrleitung oder ein anderes Behältnis. Denn beispielsweise bei der Befüllung von Kunststoffsäcken, Containern oder anderen Behältnissen ist die Staubentwicklung ein Problem. Bei staubförmigem oder körnigem Schüttgut wird zur Bewältigung dieses Problems, die aus dem Sack verdrängte, staubhaltige Luft oft einer Reinigungsanlage zugeführt, bevor sie an die Atmosphäre abgegeben wird. Der vollständigen Abdichtung des Sackes gegen den Füllstutzen und der Ableitung der staubhaltigen Verdrängungsluft zu einer Reinigungsanlage kommt daher erhöhte Bedeutung zu.

Bei der Befüllung von Kunststoffsäcken und anderen Behältnissen mit staubförmigen oder körnigen Schüttgütern kommt es weiters zur Haftung von Staubteilchen auf der Innenseite des Behältnisses im oberen Randbereich. Wenn etwa nach der Sackbefüllung das offene Sackende durch eine Kopfschweissnaht zugeschweisst werden soll, führt diese Staubablagerung zu fehlerhaften Schweissnähten. Auch bei anderen Verschlussarten ist es, um das Austreten des Staubes aus dem Sack zu verhindern, wünschenswert diese Staubablagerungen vor dem Verschliessen zu entfernen, beispielsweise durch Abblasen mit Pressluft, Abbürsten und gegebenenfalls vorherige lonisierung, um die elektrostatische Aufladung der Staubteilchen bzw. der Wandung zu neutralisieren. Diese Massnahmen führen zwar zu einer Verminderung der Staubbeladung auf den betroffenen Wandbereichen, eine vollständige Reinigung ist so jedoch nicht zu erreichen.

In der Literatur werden bereits einige Vorschläge zur Beseitigung des Staubproblems angeboten, die jedoch alle nicht zufriedenstellend sind. So schlägt beispielsweise die DE-A-26 29 065 eine Vorrichtung vor, bei der noch flache Säcke im Bereich ihrer Seitenfalten durch zwei einander gegenüberliegende, zangenartige Klemmeinrichtungen gehalten und die Öffnungsränder durch Sauger auseinandergezogen werden. Klappenartige Fülltrichterhälften sind dann um quer zur Aufzugsrichtung liegende, also zu der die Greifrichtungen verbindenden Linie parallele Achsen schwenkbar. Dabei lässt sich nicht vermeiden, dass zwischen den Spreizplatten und den Klemmeinrichtungen bei gespreizten Fülltrichterhälften im Querschnitt etwa dreieckige Kanäle verbleiben, durch die beim Füllen Staub entweicht.

Aus der DE-A-28 50 668 ist eine weitere Vorrichtung zum Befüllen von Säcken mit spreizbaren Fülltrichterhälften bekannt, bei der das Füllrohr von einem Saugrohr konzentrisch umgeben ist, so dass durch den Ringkanal zwischen dem Füllrohr und Saugrohr Staub abgesaugt werden kann. Durch diese Vorrichtung kann aber ebenfalls nicht verhindert werden, dass Staub aus den Öffnungen zwischen den äusseren Wandungen der gespreizten Fülltrichterhälften und dem an diese angeklemmten Öffnungsrand des zu befüllenden Sackes austritt.

Weiters sind Füllstutzen mit aufblasbaren Manschetten bekannt, die zum Abfüllen von Schüttgut in einseitig offene Säcke eingesetzt werden. In diesen Fällen erstreckt sich der Füllstutzen im wesentlichen vertikal und der Rand des offenen Sackendes wird über den Füllstutzen gezogen und durch Aufblasen der Manschette gehalten. Während des Abfüllens wird der Sack durch einen Sackstuhl gestützt. Staubentwicklungen während des Abfüllens lassen sich dabei oft nicht verhindern. Ausserdem sind die Ränder des offenen Endes des Sackes nach dem Abnehmen vom Füllstutzen staubbedeckt und müssen, insbesondere wenn das offene Sackende zugeschweisst werden soll, gereinigt werden.

Aus der DE-A-14 61 919 ist eine Vorrichtung bekannt, bei der zwei Schalen, die beim Aufstecken eines leeren Sackes vogelschnabelartig spitz zusammengeklappt sind und durch Spreizen von innen nach aussen den Sack gegen einstellbare Anschläge festklemmen. Zur Verhinderung eines Staubaustrittes beim Schüttvorgang sind zwischen den Schalen, die im gespreizten Zustand den Sackrand nicht bedecken, Gummiplatten befestigt. In zusammengeklappter Stellung der Schalen sind diese nach innen eingeschlagen und im gespreizten Zustand gestreckt. Als Nachteil wird hier insbesondere gesehen, dass zwei bewegliche Schalen vorhanden sind und zusätzliche Gummiplatten angebracht werden müssen. Der Gesamtaufbau dieser Vorrichtung erfordert einen zusätzlichen Gestellrahmen, wobei eine erforderliche Absaugung schräg nach oben erfolgt und dadurch auch grössere Bauabmessungen erforderlich sind.

Eine Vorrichtung der eingangs genannten Art ist beispielsweise aus der DE-A-44 15 488 und in ähnlicher Weise aus der EP-A-1 043 252 bekannt geworden. Dabei handelt es sich aber um ein sogenanntes BUCK-System, bei dem am Ende des Zufuhrkanales eine erste Klappe vorgesehen ist, und eine zweite Klappe am Ende des angedockten Teiles. Beide Klappen müssen ganz nahe aneinander liegen, so dass die Bewegung einer angetriebenen Klappe auf die andere übertragen wird und man so mit einer einzigen Betätigungseinrichtung auskommt. Da aber jede Klappe sich um ihre eigene Achse dreht, kommt es zu unerwünschter Reibung zwischen den Klappen. Der angedockte Teil ist dabei nur ein Übergabeteil, dem das eigentliche zu befüllende Behältnis, sei es ein Bearbeitungsgerät oder ein Sack ohne eigenen Verschluss nachgeschaltet ist. Dies wiederum bringt einen gewissen konstruktiven Aufwand mit sich und sichert keinen guten Verschluss an dem zu befüllenden Behältnis.

Für Container, und insbesondere sogenannte IBC's (vgl. etwa die EP-A-0 915 032 und EP-A-0 847 946), sind ebenfalls verschiedene Vorrichtungen bekannt, um den Containerdeckel abzunehmen. Beispielsweise zeigen die EP-A-0 547 861 und -0 684 928 einen Saugnapf, der sich an den Containerdeckel anlegt und dann zum Abheben betätigt wird. Einerseits erfordert dies einen innerhalb des darübergelegenenSilos untergebrachten Betätigungsmechanismus, der dann natürlich grosser mechanischer Belastung ausgesetzt ist. Dazu kommt, dass das Hindurchführen dieses Mechanismus durch einen konusförmigen Siloverschluss Dichtungsprobleme heraufbeschwört. Auch kann damit die Staubfreiheit nicht garantiert werden, weil das Aufsetzen des Deckels auf den Container in der Praxis meist die Umkehrung der Luftströmung gegen den Deckel hin erforderlich macht und dabei aufgesogener Staub wieder auf den Deckel geblasen wird.

Weil also diese Lösungen nicht befriedigten, wurde der Vorschlag nach der WO 98/46505 gemacht, nach welchem zwischen Saugvorrichtung und dem Deckel ein den Deckel ergreifendes flaches Zwischenglied angeordnet wurde. Allerdings war es Dadurch erforderlich, das Zwischenglied seitlich aus dem Schüttgutfluss herauszuführen, was zu erhöhtem Platzaufwand, einer teuren und fehleranfälligen Mechanik sowie einer komplizierten Steuerung führte.

Da alle bisher bekannten Vorrichtungen erfahrungsgemäss keine ausreichend staubfreie Abfüllung bzw. Befüllung gewährleisten konnten, war es Aufgabe der Erfindung eine Vorrichtung zu finden, die gewährleistet, dass für das Befüllen von Behältnissen, wie Säcken, mit staubförmigen oder körnigem Schüttgut eine einfache und sichere Abdeckung des Behältnisses gewährleistet ist, welche auch eine weitgehende Staubfreiheit für die Umgebung sichert, ohne dass die bei bekannten BUCK-Systemen auftretenden Probleme auftreten und ein Verschluss des angedockten Behältnisses ermöglicht wird. Erfindungsgemäss erfolgt dies mittels eines Verfahrens mit den Merkmalen des Anspruchs 1, sowie einer Vorrichtung mit den Merkmalen des Anspruches 5. Dadurch kann das Behältnis selbst verschlossen werden, sein Deckel dreht sich um die Achse des gewölbten Absperrorganes, so dass es zu keiner Reibung zwischen den beiden kommt, und es ist somit auch keine Übergabekonstruktion erforderlich. Ein erfindungsgemässer Behältnis zeichnet sich durch die Merkmale des Anspruches 7 aus.

Die konkave Ausbildung des Absperrorgans bewirkt, dass beim Anlegen eines Vakuums der Deckel des jeweiligen Behältnisses sich in der Projektion verkürzt und daher leicht aus einer Halterung herausgezogen werden kann, in welcher er das Behältnis zuverlässig staubfrei abdeckt. Die konkave Gestaltung ermöglicht auch, dass sich der Deckel voll an die innere Wölbung des Absperrorganes anlegt, so dass etwa an der Oberfläche vorhandener Staub reibungsschlüssig festgehalten werden kann. Aber selbst wenn etwas Staub in das Vakuumsystem gelangt, spielt dies deshalb keine Rolle, weil die inhärente Elastizität des Deckels eine ausreichende Rückstellkraft ausübt, sobald einmal die Verbindung zur Vakuumquelle unterbrochen ist, so dass ein Blasen gegen den Deckel hin nicht mehr erforderlich ist. Gewünschtenfalls kann aber der Deckel zusätzlich noch entsprechend Anspruch 10 ausgebildet werden, wobei die an ihm vorgesehene Feder eine zusätzliche Rückstellkraft ergeben wird.

Im Sinne der Erfindung wird das Absperrorgan dann nach dem Ansaugen des Deckels in seine Offenstellung gebracht, d.h. im Falle eines Schiebers verschoben, im Falle einer (bevorzugten) Klappe gedreht. Es sind aber natürlich auch andere Ventile, wie nach oben eine Kugel- oder Zylinderfläche bildende Ventile denkbar, wie sie im Silobau bekannt sind. Soll ein Zufuhrkanal bekannter Bauweise im Sinne der Erfindung nachgerüstet werden, dann kann das Absperrorgan (samt Gehäuse) mittels eines geeigneten Befestigungsmittels, wie etwa mittels eines Flansches, auch nachträglich am Zufuhrkanal befestigt werden. Das Absperrorgan besteht im allgemeinen aus für Klappen oder Ventile üblichen Materialien, wie etwa Edelstahl u.s.w.

Es sei erwähnt, dass der Ausdruck "konkav gewölbt" im Idealfall eine Parabelform im Querschnitt ergibt, dass aber Annäherungen etwa durch eine Hyperbelform, bevorzugt aber durch eine Kreisbogenform, durchaus unkritisch sind. Die Kreisbogenform ist jedenfalls einfacher herstellbar. Dabei ergibt sich bei einem solchen Querschnitt bevorzugt die Form eines entsprechenden Rotationskörpers, d.h. im Falle des Kreisbogen-Querschnittes eine sphärische Wölbung, im Falle der Parabel ein Paraboloid usw. Es ist aber im Rahmen der Erfindung durchaus auch möglich, statt dessen eine Zylinderform vorzusehen, obwohl dies nicht bevorzugt ist.

Vorzugsweise werden auch die Merkmale des Anspruches 2 vorgesehen. Denn dadurch ist auch der gesamte Bereich rund um den Deckel nicht nur einwandfrei abgedichtet, sondern die Saugeinrichtung ergibt eine zusätzliche Sicherheit gegen das Anlegen von Staub an den Andockflächen.

Wenn das Absperrorgan im Sinne des Anspruches 4 ausgebildet wird, so kann die das Gitter oder Lochsieb bildende Platte zusätzlich verhindern, dass Staub in das Vakuumsystem gelangt, wobei aber die Verteilanordnung überdies auch für eine gleichmässigere Ansaugung des Deckel sorgt, was die Funktion auch beim neuerlichen Aufsetzen auf das Behältnis verbessert. Überdies wird aus der späteren Beschreibung noch ersichtlich, dass die Verteilanordnung auch von blossen Aussparungen am Rande einer Verteilplatte gebildet sein kann.

Die Merkmale des Anspruches 5 bewirken, dass beim Abfüllen keine aus dem Behältnis, z.B. einem Sack, verdrängte staubhaltige Luft in die Atmosphäre entweicht und dass eine zufriedenstellende Reinheit der Sackinnenfläche im Bereich der Sacköffnung erzielt wird.

Das Behältnis selbst weist, wie schon erwähnt, bevorzugt die Merkmale des Anspruches 6 auf. Zusätzlich sind aber auch die Merkmale der Ansprüche 7 und/oder 8 von Vorteil, wie sich noch aus der Beschreibung von Ausführungsbeispielen ergeben wird.

Der Deckel kann als separater Teil gelagert und erst kurz vor dem Gebrauch mit dem Behältnis, beispielsweise durch Schweissen, Kleben, Klemmen od.dgl., verbunden werden. Ein solcher Deckel besitzt vorzugsweise die Merkmale des Anspruches 9 , die dann zweckmässig mit einer Vorrichtung nach Anspruch 4 zusammenwirken. Jedenfalls sichert die Zentriereinrichtung, dass der angesaugte Deckel nicht verrutschen kann und daher auch sicher wieder auf das Behältnis aufsetzbar ist. Zweckmässig ist der Deckel auf der Klappenseite etwas länger als der Durchmesser des Zufuhrkanales bzw. des Absperrorgans ausgebildet, weil er ja beim Ansaugen an das Absperrorgan in der Projektion verkürzt wird. Deckel und Ring können dabei einfach aus üblichen Kunststoffen wie etwa Polypropylen, Polyäthylen, Teflon (Polytetrafluoräthylen) u.s.w. gefertigt werden.

Weitere Einzelheiten der Erfindung ergeben sich aus der nachfolgenden Beschreibung von in der Zeichnung schematisch dargestellten Ausführungsbeispielen. Es zeigen:
- Fig. 1A: eine erfindungsgemässe Vorrichtung zum Befüllen von Containern, zu welcher
- Fig. 1B: ein Detail einer modifizierten Ausführungsform beim Befüllen eines Sackes veranschaulicht;
- Fig. 2: stellt das Absperrorgan der Fig. 1B in einer perspektivischen Druntersicht samt einem im Schnitt und perspektivisch gezeigten, durch das Vakuum des Absperrorganes gewölbten Deckel dar.

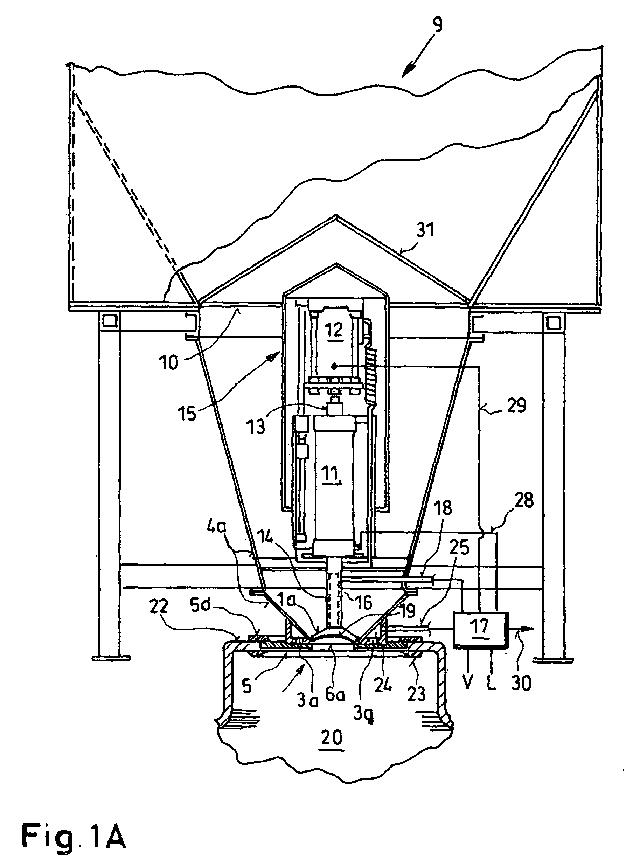

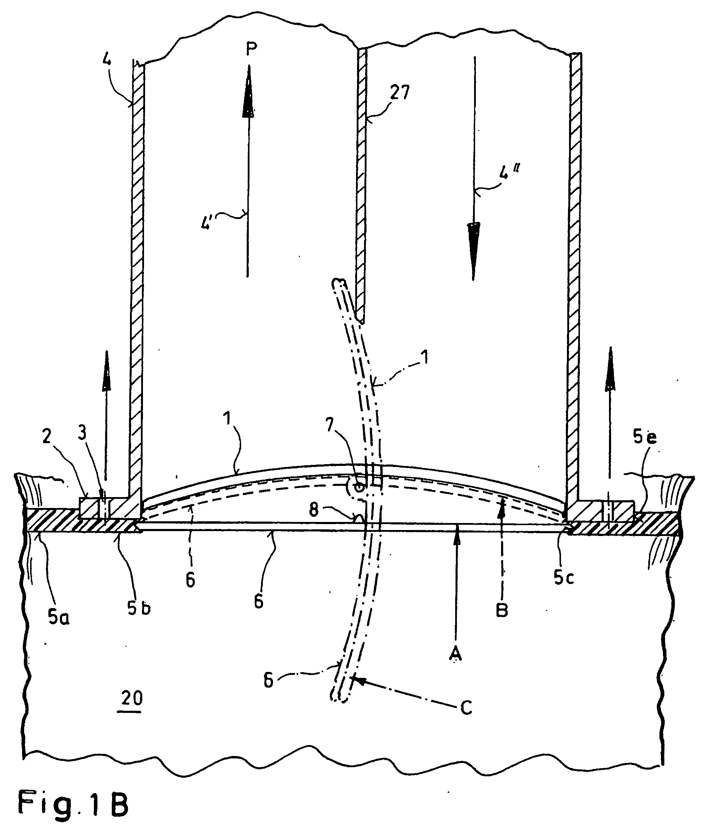

Fig. 1 zeigt eine Vorrichtung, wie sie im Prinzip bzw. zum Teil aus der EP-A- 0 045 163 bekannt geworden ist. Abweichend von der bekannten Ausführung mit einem konischen, die Öffnung 10 eines Silos 9 verschliessenden Verschlussorganes 31, welches von einer Betätigungseinrichtung, beispielsweise mit einem pneumatischen Zylinder 11 und einem darüber angeordneten Vibrator 12, von der Öffnung 10 hochhebbar ist, um einen Ringspalt entlang seines Aussenumfanges freizugeben, ist der Zylinder 11 nicht nur mit einer oberen Kolbenstange 13, sondern auch nach unten hin mit einer Kolbenstange 14 verbunden.

Diese untere Kolbenstange 14 ist, wie strichliert dargestellt, hohl und besitzt ein seitliches Anschlussstück 16, welches über einen Schlauch 18 und eine pneumatische Steuereinheit 17 mit einer Vakuumquelle V verbunden ist. Am unteren Ende der Kolbenstange 14 sitzt ein Absperrorgan 1a, das hier eine Öffnung eines an das Silo 9 anschliessehden Zufuhrkanales 4a abschliesst und beispielsweise auch konisch ausgebildet sein kann. Die Art und Form des Absperrorganes ist jedoch, wie noch zu ersehen ist, keineswegs kritisch, vielmehr kann sie an sich die unterschiedlichsten Formen haben. Auch die Ausbildung der hohlen Kolbenstange 14 kann unterschiedlich sein; es wäre denkbar, ihren Hohlraum mit einem Rohr in einen äusseren Ringraum und einen vom eingesetzten Rohr umfassten Innenraum zu unterteilen, wobei beispielsweise der Innenraum mit dem Anschlussstück 16 und der Vakuumquelle V verbunden wird, wogegen der Ringraum über entlang des Kegels des Absperrorganes 1a verlaufenden Ausblaskanälen oder einem Ringkanal bzw. eine Ringnut am Umfang des Kegels in Verbindung steht, die an den Umfangsrand des Kegels führen und über den die Dichtflächen für das Absperrorgan 1a abblasbar sind, allenfalls aber auch - in einer zeitlichen Abfolge, das Absperrorgan 1a erst, z.B. mit Stickstoff oder einem anderen Inertgas, abgespült wird, bevor man das Vakuum an die Innenseite des Absperrorganes 1a anlegt.0

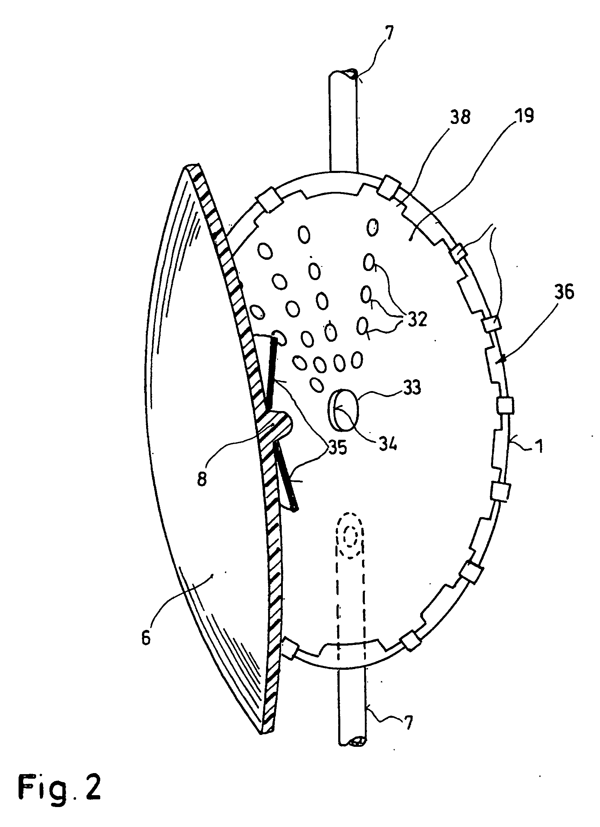

Wesentlich am Absperrorgan 1a ist lediglich, dass es im Inneren konkav gewölbt ist. Diese Wölbung kann von einem in das Absperrorgan 1a eingelegten konkav gewölbten Lochblech 19 hervorgerufen sein, wie es im einzelnen an Hand der Fig. 2 noch ersichtlich und beschrieben ist. Durch die Löcher dieses Lochbleches 19 hindurch wirkt das über den Schlauch 18 und die Bohrung der Kolbenstange 14 geführte Vakuum von der Vakuumquelle V auf einen biegsamen Deckel 6a, beispielsweise aus Kunststoff, wie Polypropylen, Polyäthylen, Teflon (Polytetrafluoräthylen) od.dgl. Das Material, aus dem der biegsame Deckel 6a hergestellt ist, wird sich in weitem Masse nach der Anwendung bzw. der Art des Behältnisses richten und vorzugsweise nicht nur biegsam sein, sondern auch eine gewisse Elastizität aufweisen. Im vorliegenden Fall deckt der Deckel 6a einen Container 20 ab, von dem nur der Halsteil gezeigt ist. Um den Deckel 6a besser in die Wölbung des Absperrorganes 1a bzw. des Lochbleches 19 saugen (und dabei verformen) zu können, mag es vorteilhaft sein, wenn der Deckel 6a im Zentrum aus einem elastischeren Material besteht als aussen, beispielsweise indem das Zentrum dünner ausgeführt ist. Dies kann sogar in mehreren Abstufungen so geschehen, dass der Deckel beim Ansaugen nach Art einer Konusfeder etwas auseinandergezogen wird und sich so der Wölbung der Platte 19 besser anpassen kann, während er in entspanntem Zustand flach zusammenfällt.

Dieser Container 20 besitzt eine Einfüllöffnung 21, die vom Deckel 6a und einen ihn umgebenden, beispielsweise ringförmigen, Rahmen 5, zweckmässig aus relativ steifem Kunststoff, abgedeckt ist. Der Deckel 6a sitzt dabei in einer, besonders aus Fig. 1B ersichtlichen, keilförmigen Innennut 5c des Rahmens 5, doch könnte er an sich selber eine Nut bilden, in welche der Rahmen 5 in ähnlicher Weise eingreift, wie eine Halswandung 22 des Containers 20 von einem radial äusseren Teil 5d des Rahmens 5 von oben und von einem Dichtungsgummiteil 23 des Rahmens 5 von unten umgriffen wird. Andere Möglichkeiten der Befestigung des Rahmens 5 sind ebenfalls denkbar, wie etwa das Ankleben oder Anschweissen an der Halswandung 22.

Der Container 20 kann an sich in herkömmlicher Weise an den Zufuhrkanal 4a angedockt werden. Um jedoch eine besonders staubdichte Verbindung und eine präzise Orientierung der aneinander anzudockenden Teile zu erhalten, ist am Ende des Zufuhrkanales 4a im Ausführungsbeispiel nach Fig. 1A eine Ringkammer 24 über ein Rohr 25 und die Steuereinheit 17 mit der Vakuumquelle V verbunden. Falls der Vakuum-Unterdruck in dem Schlauch anders als im Rohr 25 sein soll, kann in einer dieser beiden Verbindungen ein entsprechendes Druckreduzierventil vorgesehen sein. Die Ringkammer 24 besitzt nach unten gerichtete Auslassöffnungen 3a, über die der radial innere Teil des Rahmens 5 an das untere Ende des Zufuhrkanales 4a angesaugt wird.

Es ist vorteilhaft, wenn die Steuereinheit 17 auch den Zylinder 11, und gegebenenfalls auch den (pneumatischen) Vibrator 12 steuert und dazu auch mit einer Luftdruckquelle L verbunden ist. Dadurch können nämlich alle nachstehend beschriebenen Vorgänge synchron und in der richtigen zeitlichen Reihenfolge ablaufen.

Nach dem, hier nicht im einzelnen gezeigten und zum Stande der Technik gehörenden, Andocken des Containers 20 an das untere Ende des Zufuhrkanales 4a wird das Deckelsystem, d.h. der Rahmen 5, über die Vakuumbohrungen 3a der Ringkammer 24 an den Zufuhrkanal angesaugt. Wie Fig. 1B deutlicher zeigt, ist es vorteilhaft, wenn der, vorzugsweise ringförmige (gegebenenfalls aber auch polygone) Rahmen 5 aus einem äusseren steiferen Ring 5a und einem, zweckmässig mit ihm in einem Stück gegossenen, inneren, in Axialrichtung dünneren Ring 5b besteht. Der äussere Ring 5a schliesst sich an den inneren Ring 5b unter Bildung einer Stufe 5e an, die vorzugsweise den Zufuhrkanal 4 bzw. einen Endflansch 2 desselben so umfasst, dass der äussere Ring 5a sich daran zentriert. Zu diesem Zeitpunkt ist sowohl das Absperrorgan 1a, als auch der Deckel 6a geschlossen, d.h. der Deckel 6a liegt noch in der in Fig. 1B in grösserem Massstab gezeigten Rahmen und zwar innerhalb der Ringnut 5c (in Fig. 1B Situation A des Deckels 6). Der vorteilhaft zweiteilige Kunststoffring 5a, 5b kann dabei so ausgebildet sein, dass der Innenring 5b genau mit dem Flansch 2 abschliesst oder etwas länger ist, damit über den diesen Innenring 5b das Deckelsystem 5, 6 mittels Vakuum über die Vakuumbohrungen 3 bzw. 3a an den Zufuhrkanal 4 bzw. 4a angesaugt werden kann. Der Aussendurchmesser des Rahmens bzw. Ringes 5 kann entweder dem Durchmesser einer Sacköffnung entsprechen oder aber grösser als dieser sein, wodurch eine zusätzliche Abdichtung erreicht wird.

Um das Behältnis 20 (bzw. 20a in Fig. 1B) nunmehr befüllen zu können, wird der Deckel 6 mittels Vakuum an das Absperrorgan 1a (bzw. 1 in Fig. 1B) angesaugt. Dazu wird die Rohrleitung 25 von der Steuerung 17 mit der Vakuumquelle V verbunden, so dass sich innerhalb der hohlen Kolbenstange 14 und zwischen der Aussenwand des Absperrorganes 1a und dem Gitter oder Lochblech 19 ein Unterdruck aufbaut, der über die Öffnungen des Bleches 19 relativ gleichmässig auf den biegsamen Deckel 6a (bzw. 6 in Fig. 1B), d.h. auf alle Flächenteile desselben, einwirkt.

Wenn hier von "relativ gleichmässig" die Rede ist, so heisst dies, dass im wesentlichen alle Flächenteile des Deckels 6a (bzw. 6 in Fig. 1B) einem Unterdruck ausgesetzt sind. Dies bedeutet aber nicht, dass dieser Unterdruck unter allen Umständen völlig gleichmässig sein muss. So kann es - wie unten an Hand der Fig. 2 noch erläutert wird - vorteilhaft sein, wenn die Öffnungen des Lochbleches in der Mitte desselben etwas grösser sind, um einen geringeren Widerstand für den Saugdruck und damit einen geringeren Druckabfall zu bewirken als gegen die Peripherie zu. Dies würde bewirken, dass der Unterdruck in der Mitte des Deckels 6 bzw. 6a etwas stärker einwirkt als am Rande.

Wenn der Deckel 6 bzw. 6a an die konkave Wölbung des Absperrorganes 1 bzw. 1a und dessen Lochblech 19 angesaugt ist, verkürzt er sich in der senkrechten Projektion und schliesst nunmehr bündig mit dem Absperrorgan 1 bzw. 1a ab (Fig. 1B; Situation B). Aus diesem Grunde ist es vorteilhaft, wenn der Deckel 6 bzw. 6a im flachen Zustand (Situation A in Fig. 1B) einen etwas grösseren Durchmesser besitzt als dem unteren Durchmesser des Absperrorganes 1 bzw. 1a entsprechen würde. Mit diesem grösseren Durchmesser aber greift der Deckel, wie besonders aus Fig. 1B ersichtlich, in die innere Ringnut 5c ein und wird von dieser festgehalten. Die Tiefe dieser Nut 5c muss natürlich mindestens dem Durchmesser des flachen Deckels 6 bzw. 6a entsprechen. Sie kann beispielsweise dadurch gebildet werden, dass der Rahmen 5 von zwei in Achsrichtung des Behältnisses 20 bzw. 20a gegeneinander versetzten Ringen, z.B. mit Axialflanschen zum Ankleben oder Anschweissen, gebildet wird, in die der Deckel 6 bzw. 6a beim Verschliessen einzusetzen ist. Beim Verschliessen des Behältnisses, wie etwa des Sackes 20a, kann beispielsweise das Vakuum durch die Öffnungen 3 hindurch aufrecht bleiben, so dass der jeweils obere Ring des Rahmens daran festgehalten wird, während gleichzeitig die (nicht gezeigte) Andockvorrichtung den Sack freigibt und sich dieser unter seinem Füllgewicht etwas abwärts bewegt. Dadurch wird aber der Abstand zwischen dem oberen und dem unteren Ring aufgeweitet, so dass dann der Deckel leichter in die Nut einsetzbar ist.

Sobald aber der Deckel 6 bzw. 6a unter Biegung in das konkav gewölbte Absperrorgan 1 bzw. 1a gesaugt ist und sich so in der senkrechten Projektion verkürzt hat, tritt er aus der Nut 5c, d.h. das Absperrorgan 1 bzw. 1a öffnet somit zunächst nur einen Spalt im Deckelsystem, bevor es ihn ganz abhebt. Zweckmässig ist die Steuerung 17 derart ausgelegt, dass zu diesem Zeitpunkt auch das Absperrorgan 1 bzw. 1a nur einen Spalt am unteren Ende des Zufuhrkanales 4 bzw. 4a freigibt. Bezogen nun auf die Darstellung und Ausführungsform der Fig. 1B ist ersichtlich, dass der Zufuhrkanal 4 bevorzugt in Achsrichtung durch eine Sperrwand 27 oder ein Sperrblech unterteilt ist, so dass die im Behältnis 20 bzw. 20a enthaltene Luft über einen Abluftkanal 4' entweichen kann, wenn das Behältnis 20 bzw. 20a mit Schüttgut über einen durch das Sperrblech 27 gesonderten Schüttgutkanal 4" befüllt wird. Der Abluftkanal 4' zweigt, wie in Fig. 1B durch einen Pfeil P nach oben angedeutet ist, seitlich aus dem Zufuhrkanal 4 ab, um zu einem Abscheider, insbesondere einem Filter, zu führen. Auf diese Weise wird die angestrebte Staubfreiheit noch unterstützt. Ausserdem kann das einem Filter im allgemeinen zugeordnete Abreinigungs- bzw. Rückspülsystem (nicht dargestellt, da an sich bekannt) dazu benutzt werden, im Falle eines Sackes 20a diesen aufzublasen und damit zur Aufnahme von Schüttgut bereit zu machen. Es ist deshalb bevorzugt, wenn das Absperrorgan 1 bzw. 1a erst einen Spalt weit geöffnet ist, das in der Entlüftung von Abfüllvorrichtungen integrierte Filter wird rückzuspülen und den Sack 20a dadurch aufzublasen und zu inertisieren. Daher ist es zweckmässig, wenn die Steuereinheit auch mit der Filterrückspülung verbunden ist und diese zeitgerecht und synchronisiert steuert.

Anschliessend öffnet das Absperrorgan 1 bzw. 1a vollständig, das Schüttgut gelangt nunmehr über die Befüllseite in das Behältnis 20 bzw. 20a, während die verdrängte Luft wird über die Entlüftungsseite bzw. den Abluftkanal 4' und das Filter abgeleitet wird (Fig. 1B; Situation C). Zu diesem Zweck erhält, im Falle der Fig. 1A der Zylinder 11 an seiner Unterseite Druckluft aus der Druckluftquelle L über die Steuerung 17 und eine Leitung 28 zugeführt. Gegebenenfalls wird dann das Rieseln des Schüttgutes noch durch die Betätigung einer Lockerungseinrichtung, wie des Vibrators 12 über eine mit der Druckluftquelle L durch die Steuereinheit 17 verbundene Leitung 29 angeregt, wobei diese Riesel-Anregungsvorrichtung die verschiedensten Formen annehmen kann, etwa als Pressluftzufuhr in den Silo (über Düsen oder Perforationen) ausgebildet sein kann. In manchen Fällen (Feinstäube) wirkt der Vibrator 12 eher als Verdichter und bewirkt die Ausbildung von Staubagglomeraten, welche leichter rieseln.

Nach Beendigung der Abfüllung wird das an den Abluftkanal 4' angeschlossene Filter nochmals rückgespült - in gewissen Fällen bzw. bei heiklem Schüttgut gegebenenfalls mit Inertgas, wie N₂. Auch dieser Vorgang erfolgt vorteilhaft gesteuert durch die Steuereinheit 17. Dann wird das Absperrorgan 1 bzw. 1a gegebenenfalls wieder bis auf einen kleinen Spalt geschlossen und das überschüssige Gas aus dem Sack über den Abluftkanal 4' und dessen Filter abgesaugt. Danach wird das Absperrorgan 1 bzw. 1a - im Falle der Fig. 1A durch Ablassen der der Unterseite des Zylinders 11 zugeführten Druckluft aus der Druckluftquelle L über eine mit der Atmosphäre verbundene Leitung 30 entweder unter dem Druck des auf das Verschlussorgan 31 wirkenden Schüttgutes oder durch zusätzliches Einblasen von Druckluft an die Oberseite des Zylinders 11 (gesteuert von der Steuereinheit 17) wieder vollständig geschlossen.

Nun wird das Vakuum an der Innenseite des Absperrorgans 6 bzw. 6a mit Hilfe der Steuereinheit 17 abgebaut bzw. egalisiert, d.h. die Steuereinheit 17 unterbricht die Verbindung zwischen der Leitung 18 und der Vakuumquelle V. Vorteilhaft erfolgt die Egalisierung rascher durch Verbindung der Leitung 18 mit der Umgebungsleitung 30. Gegebenenfalls wird aber sogar die Leitung 18 kurzfristig mit der Druckluftquelle L, zweckmässig unter Reduzierung des Druckes, z.B. über ein in die Steuereinheit 17 integriertes Druckreduzierventil, beaufschlagt, um den Deckel 6 bzw. 6a unter Druck in die Innennut 5c (Fig. 1B) des Kunststoffringes 5 zu drücken. Dieser letztere Vorgang kann aber entbehrlich sein, wenn - wie später an Hand der Fig. 2 gezeigt, der Deckel 6 bzw. 6a mit einer blattförmigen (oder tellerförmigen) Rückholfeder versehen ist. Beim Lösen des Vakuums streckt sich der biegsame Deckel 6 bzw. 6a und streift über die Oberfläche der gewölbten Innenseite des Absperrorganes 1 bzw. 1a, welche vorteilhaft von dem schon erwähnten Gitter oder Lochblech 19 (Fig. 1A, 2) gebildet ist. Dabei wird eventuell anhaftendes Produkt von der Innenseite des Absperrorgans 1 bzw. 1a abgeschabt und fällt in das Behältnis. Auf diese Weise erfolgt durch den biegsamen Deckel 6 bzw. 6a eine automatische Reinigung der Innenseite des Absperrorganes 1 bzw. 1a, so dass ein staubfreier Betrieb weiterhin unterstützt wird.

Zuletzt wird das Vakuum über die Leitung 25 zur Ringkammer 24 (Fig. 1A) des Andocksystems für das Behältnis 20 bzw. 20a ebenfalls abgeschaltet und zweckmässig in der oben mit Bezug auf die Leitung 18 beschriebenen Weise egalisiert, wodurch sich das Deckelsystem mit dem Rahmen 5 vom Abfüllstutzen bzw. dem Zufuhrkanal 4 löst und somit der Sack 20a, der Container 20 oder das verwendete Abfüllgebinde freigegeben wird. Gewünschtenfalls kann es nun mit einem separaten Hauptdeckel verschlossen werden. Das Deckelsystem mit Rahmen 5 und biegsamem Deckel 6 aber verbleibt in jedem Falle im Gebinde.

Die Fig. 1B wurde oben bereits so weit beschrieben als Ihre Ausführungsform mit der der Fig. 1A identisch ist. Es wurde bereits erwähnt, dass die Ausführung nach Fig. 1B beispielsweise für die Befüllung von Säcken 20a als Behältnis ausgeführt ist. Diese Säcke 20a können in der eben geschilderten Weise an den, hier zylindrischen, Zufuhrkanal 4 andocken, es ist aber ebenso möglich, dass ihr oberes Ende bis zu einem, z.B. vom Dekkelsystem 5, 6 selbst gebildeten oder bedingten, äusseren Anschlag in den Zufuhrkanal 4 eingeführt wird, was aber nicht bevorzugt ist. Die Form der Säcke 20a kann herkömmlich mit gleichen Querschnitten oben und unten ausgebildet sein; sie kann aber auch nach oben hin konisch zulaufend sein, so dass das Deckelsystem 5, 6 einen annähernd glei-chen Durchmesser wie das obere Ende des Sackes hat. So kann der Rahmen 5 von zwei in einen Sack unter Freilassung einer Nut eingeklebten Ringen gebildet sein, wobei der Deckel 6 dann in die Nut eingesetzt wird. Eine andere Möglichkeit besteht darin, dass der Rahmen eine äussere Umfangsnut besitzt, über die der Sack 20a geschoben und dann mittels eines den Sack umfassenden und in die äussere Umfangsnut drückenden Gummiringes festgehalten wird. Bei Inlinersäcken ist es von Vorteil einen Kunststoffring mit einer zur Stabilisierung des Sackes dienenden Verlängerung oder Ringflansch zu verwenden, um ein staubfreies Entleeren des Gebindes zu gewährleisten. Andere Möglichkeiten der Befestigung von Deckel und Sack erfolgen mittels geeigneter Verschlüsse, wie etwa Kabelbinder oder Sackschnallen oder mittels Klemmen. Eine andere Verbindung des Deckels 6a mit dem Rahmen 5 kann darin bestehen, dass im Bereiche des Flansches 2 eine Schweisseinrichtung (oder eine Aufbringeinrichtung für Klebstoff oder klebendes Material vorgesehen ist, so dass der Deckel 6 lediglich auf den Rahmen 5 gelegt und dann festgeschweisst (z.B. Ultraschallschweissen) oder festgeklebt wird. Aber auch bei Kunststofftrommeln mit Ringanschluss, die für Massengüter ohne Wassergefährdung bzw. zur Wiederbefüllung (Recycling) geeignet sind, ist die erfindungsgemässe Vorrichtung sowohl beim Befüllen als auch beim Entleeren von Vorteil, da auch hier Staubfreiheit gewährleistet werden kann. Das Entleeren kann beispielsweise so erfolgen, dass das Behältnis zuerst in der beschriebenen Weise an die erfindungsgemässe Deckelabhebevorrichtung angedockt und der Deckel abgenommen wird, worauf das Behältnis von den Andockflächen, z.B. des Flansches 2, gelöst und oberhalb eines zu befüllenden Raumes mit der Öffnung 21 abwärts gedreht wird.

Unterschiedlich zur Ausführung der Fig. 1A ist auch, dass als Absperrorgan statt eines Konus 1a eine Drehklappe 1 verwendet wird diese kann um eine einseitig und asymmetrisch angeordnete Drehachse schwenken, ist aber bevorzugt in der gezeigten Weise als sogenannte Schmetterlingsklappe mit einer mittigen Drehwelle 7 ausgeführt. Diese Welle 7 ist vorzugsweise hohl, so dass die Klappe 1 über die Hohlwelle 7 (und eine der Leitung 18 der Fig. 1A entsprechende Vakuumleitung) evakuiert und durch die Wölbung der Klappe 1 der Deckel 6 angesaugt werden kann, wobei sich dieser wiederum in der senkrechten Projektion gegenüber der dargestellten Situation A verkürzt und nunmehr bündig mit der Klappe abschliesst (Fig. 1B; Situation B), wobei er aus der ringförmigen Innennut 5c herausgezogen wird. Die Art des Betriebes bleibt im wesentlichen gleich, wie oben beschrieben, mit der Ausnahme, dass das Absperrorgan 1 hier natürlich gedreht statt linear verschoben wird. Dies zeigt, dass im Rahmen der Erfindung die verschiedensten Typen von Absperrorganen Anwendung finden können. Die Steuerung kann dabei gegebenenfalls mindestens teilweise von Hand aus erfolgen, d.h. die Steuereinheit 17 sollte mindestens für das Andocken und die Einleitung des Vakuums in das gewölbte Absperrorgan vorgesehen sein.

Oft werden bei der Abfüllung zwei Säcke verwendet. In diesem Fall kann der zweite, äussere Sack bei Verwendung der erfindungsgemässen Abfüllvorrichtung eine Art Glove-Box-Funktion übernehmen. Dazu wird der innere Sack am Deckelsystem 5, 6 bzw. am Kunststoffring 5, wie oben angeführt, befestigt, und der zweite Sack wird mittels eines Blähschlauches (d.h. eines aufblasbaren Schlauches) an der Aussenseite des Abfüllstutzen bzw. Zufuhrkanales 4 angebracht. Der Zwischenraum zwischen den beiden Säcken wird beispielsweise mit Inertgas, insbesondere N₂, gespült. Dies ist insbesondere bei der Abfüllung von gegen Sauerstoff empfindlichen Substanzen, die unter Schutzgasatmosphäre abgefüllt werden müssen, von Vorteil.

Da das Deckelsystem 5, 6 im Abfüllgebinde bzw. Sack verbleibt, bietet die erfindungsgemässe Vorrichtung auch bei der Entleerung derselben Vorteile gegenüber bisher üblichen Systemen. So besteht beispielsweise bei Big-Bags die Möglichkeit, bei der Entleerung desselben den Entleerstutzen bzw. Zufuhrkanal, der das Absperrorgan der erfindungsgemässen Vorrichtung trägt, jederzeit wieder zu verschliessen und so den Produktfluss jederzeit zu stoppen. Das Entleeren kann, wie schon eingangs erwähnt, zur Zufuhr in einen Prozess, wie Reaktor (beispielsweise in eine Zone eines mehrere Zonen umfassenden Reaktors), Mischer, Mühle usw. oder einfach in eine Rohrleitung oder ein anderes Behältnis erfolgen.

Es versteht sich aus der oben gegebenen Beschreibung des vorzugsweise durch die Steuereinheit 17 bestimmten Ablaufes, dass die Erfindung auch das Verfahren und Vorgehen beim Betrieb der Abfüllvorrichtung mit dem Deckelsystem 5, 6 des jeweiligen Behältnisses 20 bzw. 20a umfasst.

Eine Ausführungsform der Art der Befestigung der Welle 7 am Absperrorgan 1 wird an Hand der Fig. 2 beschrieben. In dieser Fig. 2 ist die Klappe 1 (dasselbe gilt analog für den Konus 1a) der Fig. 1B von unten in Perspektive gezeigt. Die im Normalbetrieb mit dem Flansch 2 (Fig. 1B) bündig abschliessende Klappe 1 nach innen gewölbt und mit dem Lochgitter 19 ausgekleidet. Eine Welle 7 der Klappe ist dabei als Hohlwelle ausgebildet, über die das Vakuum an den Innenraum der Klappe 1 anlegbar ist. Die Hohlwelle 7 ist hier in Form zweier hohler Wellenstummel gezeigt, so dass das Vakuum von zwei Seiten her an den Innenraum der Klappe, d.h. zwischen diese und das Verteilblech 19, gelegt werden kann. Es würde aber auch genügen, einen einzigen Wellenstummel hohl, den anderen voll auszubilden. Auch braucht die Verbindung mit der Klappe nicht in der gezeigten Weise über einen schräg endenden Wellenstummel der Welle 7 erfolgen; eine Variante wäre, dass die Hohlwelle einen Längskanal und einen mit dem Innenraum der Klappe zwischen dieser und dem Lochblech 19 verbundenen Radialkanal aufweist. Selbstverständlich wäre es ebenso möglich, das Vakuum über einen sich mit der Klappe mitbewegenden Schlauch zuzuführen, doch liegt dieser dann im Schüttgutstrom, was in den meisten Fällen vermieden werden sollte.

Wie in Fig. 2 angedeutet ist, erstrecken sich Perforationslöcher 32 über die Fläche der Platte 19. Diese Perforationslöcher können über Umfangskreise mit unterschiedlichem Radius gleich grosse Öffnungsquerschnitte haben oder auch verschieden grosse, beispielsweise mit ein grösseren Löchern etwa in der Mitte. Fig. 2 zeigt ein relativ grosses zentrales Loch 33, das hier aber auch die Rolle einer Zentriervorrichtung 8, 33 für den Deckel 6 spielt. Denn der Kunststoffdeckel 6 weist in der Mitte vorteilhaft eine Erhöhung bzw. einen Fortsatz 8 zum zentrierten Andocken an die Klappe 1 auf, wobei der Fortsatz 8 sich in der Öffnung 33 zentriert. Dazu besitzt die Öffnung 33 zweckmässig einen in das Innere der Klappe 1 abstehenden Kragen 34. Ferner kann der Deckel 6, besonders im Bereiche dieses Fortsatzes 8, mit einer als Rückholfeder 35 dienenden Blattfederanordnung versehen sein, wie dies oben bereits beschrieben wurde. Es versteht sich, dass prinzipiell die Zrentriereinrichtung auch umgekehrt ausgeführt sein könnte, nämlich mit einer Vertiefung im Deckel 6 bzw. 6a und einem darin eingreifenden Dom in der Platte 19. Die dargestellte Ausbildung bietet jedoch, wie oben ausgeführt, Vorteile. Auch könnten zum Zentrieren mehr als ein Fortsatz 8 bzw. mehr als eine Vertiefung 33 (die gegebenenfalls auch nur dellenartig ist) vorgesehen sein.

Es wurde bereits ausgeführt, dass die Lochplatte 19, nicht unbedingt ein vom Absperrorgan 1 bzw. 1a gesonderter Teil sein muss. Es ist aber bevorzugt, wenn die Lochplatte 19 leicht auswechselbar am Absperrorgan befestigt ist. Im Ausführungsbeispiel der Fig. 2 besitzt das Lochblech 19 an seinem Umfang Einkerbungen oder Ausschnitte 36. Diese Einkerbungen können schon für sich ausreichend sein, um den Deckel 6 anzusaugen. In den meisten Fällen wird dies aber nicht bevorzugt sein, weil dann das Vakuum mehr am Rand als in der Mitte wirkt. Die Einkerbungen 36 bieten sich aber noch für eine andere Funktion an, indem von der Klappe 1 nach innen abstehende Pratzen 37 die zwischen den Einkerbungen 36 radial vorragenden Vorsprünge 38 ergreifen und so die Platte 19 festhalten. Will man die Platte 19 auswechseln, beispielsweise um sie durch eine mit grösseren Löchern (und kleinerem Druckwiderstand) zu ersetzen oder um sie reinigen, so braucht man die Platte 19 nur so zu drehen, dass die Pratzen 37 jeweils einer Einkerbung 36 gegenüberliegen, worauf die Platte 19 von der Klappe 1 entfernt werden kann. Das Befestigen einer neuen Platte 19 erfolgt natürlich umgekehrt.

Da das Deckelsystem im Abfüllgebinde bzw. Sack verbleibt, bietet die erfindungsgemässe Vorrichtung auch bei der Entleerung derselben Vorteile gegenüber bisher üblichen Systemen. So besteht beispielsweise bei Big-Bags die Möglichkeit, bei der Entleerung desselben den Entleerstutzen, der das Absperrorgan der erfindungsgemässen Vorrichtung trägt, jederzeit wieder zu verschliessen und so den Produktfluss jederzeit zu stoppen. Bei Inlinersäcken ist es von Vorteil, einen Kunststoffring 5 mit einer zur Stabilisierung des Sackes dienenden Verlängerung zu verwenden, um ein staubfreies Entleeren des Gebindes zu gewährleisten. Somit eignet sich die erfindungsgemässe Vorrichtung zum staubfreien Befüllen von verschiedensten Gebinden bzw. Säcken, wie einfachen Kunststoffsäcken, Inlinersäcken, Big-Bags, Kunststofftrommeln, Containern, IBC's u.s.w. Weiters eignet sich diese Vorrichtung auch zum staubfreien Entleeren der Gebinde bzw. Säcke. Dies ist insbesondere bei der Produkteintragung in Reaktoren von Vorteil, da die Gebinde bzw. Säcke nicht schon vorher geöffnet werden müssen. Auch bei Umfüllanlagen ist dies ein grosser Vorteil, da es während des Umfüllvorganges zu keinem Produktaustritt kommt. Ferner ist klar, dass bei einererfindungsgemässen Vorrichtung nicht unbedingt zwei Absperrorgane 1 und 31 hintereinandergeschaltet sein müssen, sondern dass gegebenenfalls eines davon genügt. Gewünschtenfalls kann diesem eine Schleuse vorgeordnet werden, um den Produktdruck auf das Absperrorgan zu begrenzen.

Durch die erfindungsgemässe Vorrichtung wird jedenfalls gewährleistet, dass das Abfüllen bzw. Umfüllen von, Befüllen mit staubförmigen oder körnigem Schüttgut, wie etwa von Feinchemikalien und Wirkstoffen, staubfrei erfolgt. Dadurch werden Verunreinigungen der Anlage, der Abfüllgebinde und Paletten vermieden, wodurch die damit verbundene Reinigung derselben entfällt. Weiters werden Produktverluste vermieden, was insbesondere bei teuren Wirkstoffen und Feinchemikalien ein wirtschaftlicher Vorteil ist. Zudem wird eine Kontamination der Abfüllmannschaft bzw. mögliche Kreuzkontaminationen mit anderen Chemikalien verhindert.

## Patentansprüche

1. Verfahren zum Entleeren oder Befüllen eines Behältnisses mit staubförmigem oder körnigem Schüttgut aus einem Aufnahmebereich (9) mit einem an dessen Ende vorgesehenen Zufuhrkanal (4), an dessen Ende wiederum ein konkav, vorzugsweise mit Kreisbogenform im Querschnitt, zum Ende zu gewölbtes Absperrorgan (1; 1a), insbesondere eine um eine Achse schwenkbare Klappe (1), vorgesehen ist, welches - nach dem Andocken eines Anschlussteils (20, 20a) an das Ende des Zufuhrkanales (4) - zum Befüllen in eine Offenstellung und danach in eine Geschlossenstellung gebracht wird und einen Anschluss (7) an eine von einer Steuereinrichtung (17) gesteuerte Vakuumquelle (V) aufweist, um ein deckelartiges Element (6, 6a) des angedockten Anschlussteils (20, 20a) anzusaugen und so zu einer gemeinsamen Bewegung zu verbinden, wobei der Anschlussteil unmittelbar das einseitig offene Behältnis (20, 20a) bildet, und dessen Öffnung an das Ende des Zufuhrkanales angedockt wird, **dadurch gekennzeichnet**,
a) dass auf die Öffnung des Behältnisses (20, 20a) jeweils vor und nach dem Befüllen ein elastisch biegsamer Deckel (6, 6a) als deckelartiges Element aufgesetzt wird, um es so zu verschliessen, und
b) dass dieser Deckel (6, 6a) im flachen Zustand einen etwas grösseren Durchmesser besitzt, als dem ihm zugewandten Durchmesser des gewölbten Absperrorganes (1; 1a) entspricht, so dass er im angesaugten Zustand zwar mit diesem bewegt werden kann, jedoch beim Aufsetzen auf die Öffnung des Behältnisses (20, 20a) auf Grund seines im flachen Zustand vergrösserten Durchmessers von diesem festgehalten wird.

2. Verfahren nach Anspruch 1, **dadurch gekennzeichnet, dass** mit Hilfe der Steuereinrichtung (17) zunächst das Behältnis (20; 20a) mittels der Andockeinrichtung (2, 3) an den Zufuhrkanal (4) angedockt wird, und dass anschliessend der Anschluss (7) des konkav gewölbten Absperrorgans (1) mit der Vakuumquelle (V) verbunden wird, wodurch der Deckel (6) des Behältnisses (20; 20a) in die konkave Wölbung des Absperrorganes (1) gesaugt wird
und/oder ,
dass der von der Vakuumquelle erzeugte Unterdruck innerhalb des gewölbten Absperrorgans (1) vergleichmässigt wird.

3. Verfahren nach Anspruch 1 oder 2, **dadurch gekennzeichnet, dass** der Deckel (6, 6a) am Absperrorgan mit Hilfe einer Zentriereinrichtung (33), vorzugsweise in Form mindestens einer Zentriervertiefung (33) für einen entsprechenden Fortsatz (8) des Deckels (6), zentriert wird.

4. Verfahren nach einem der vorhergehenden Ansprüche, **dadurch gekennzeichnet**, die aus dem einseitig geschlossenen Behältnis (20; 20a) beim Befüllen austretende Luft über einen Abluftkanal (4') abgeführt wird.

5. Vorrichtung zur Durchführung des Verfahrens nach einem der vorhergehenden Ansprüche, welche folgendes aufweist:
a) einen Aufnahmebereich (9) mit einem am Ende vorgesehenen Zufuhrkanal (4),
b) an dessen Ende wiederum ein konkav, vorzugsweise mit Kreisbogenform im Querschnitt, zum Ende zu gewölbtes Absperrorgan (1; 1a), insbesondere eine um eine Achse schwenkbare Klappe (1), vorgesehen ist, das zum Befüllten in eine Offenstellung und danach in eine Geschlossenstellung bringbar ist,
c) ein mit einem elastisch biegsamen Deckel (6, 6a) verschliessbarer Anschlussteil (20, 20a), der mit Hilfe einer Andockeinrichtung (2, 3) am Ende des Zufuhrkanales (4) an den Aufnahmebereich (9) andockbar ist,
wobei das Absperrorgan (1, 1a) einen Anschluss (7) an eine von einer Steuereinrichtung (17) gesteuerte Vakuumquelle (V) aufweist, um den elastisch biegsamen Deckel (6, 6a) des angedockten Anschlussteil (20, 20a) gegen die konkave Wölbung des Absperrorgans (1, 1a) zu saugen und so zu einer gemeinsamen Bewegung mit diesem zu verbinden,
d) ein in Befüllrichtung vor dem Absperrorgan (1, 1a) gelegenes, insbesondere kegelförmiges, Verschlussorgan (31), das über eine Betätigungseinrichtung (15) aus einer Geschlossenstellung in eine Offenstellung bringbar ist und umgekehrt, und
e) eine Steuereinrichtung (17), die für eine synchronisierte Funktion der genannten Ansaugung des Deckels (6, 6a) des angedockten Anschlussteiles (20, 20a) und der genannten Öffnungsbewegung und des Öffnens des vor dem Absperrorgan (1, 1a) gelegenen Verschlußorganes (31) ausgebildet ist.

6. Vorrichtung nach Anspruch 5, **dadurch gekennzeichnet, dass** wenigstens eines der folgenden Merkmale vorgesehen ist:
a) die Andockeinrichtung (2, 3) weist eine Saugeinrichtung (3) an einer Andockfläche (3) des Endes des Zufuhrkanales (4) auf, durch die ein den Deckel (6) umgebender, mit dem Behältnis (20; 20a) verbundener Randbereich (5a, 5b) am Ende des Zufuhrkanales (4) fixierbar und orientierbar ist;
b) das Absperrorgan (1) ist mit einer Verteilanordnung (19) für das Vakuum, vorzugsweise einem Gitter oder Lochblech (19), und/oder einer Zentriereinrichtung (33), vorzugsweise in Form mindestens einer Zentriervertiefung (33) für einen entsprechenden Fortsatz (8) des Deckels (6), versehen;
c) an den Zufuhrkanal (4) ist ein Abluftkanal (4') zum Abführen der im zu befüllenden Behältnis enthaltenen Luft angeschlossen, wobei vorzugsweise der Zufuhrkanal (4) durch eine Sperrwand (27) in Kanäle (4', 4") für die Zufuhr von Schüttgut und die Abfuhr von Luft unterteilt ist und/oder der Luftabfuhrkanal (4') an eine Vakuumquelle, zweckmässig auch an einen Abscheider, wie ein Filter, angeschlossen ist, das vorteilhaft mit einem, insbesondere durch die Steuereinrichtung (17) steuerbaren, Rückspülsystem versehen ist.

7. Behältnis (20; 20a) für eine Vorrichtung nach Anspruch 5 oder 6, mit mindestens einem eine Befüllungsöffnung (21) verschliessenden Deckel (6; 6a), **dadurch gekennzeichnet, dass** der Deckel (6; 6a) elastisch biegsam ausgebildet und so unter Durchbiegung und unter Verkürzung in senkrechter Projektion mittels Vakuum vom Behältnis (20; 20a) abhebbar ist, und dass der biegsame Deckel (6; 6a) in seiner das Behältnis (20; 20a) verschliessenden Lage von einem etwa in gleicher Ebene liegenden steiferen, insbesondere ringförmigen, Rahmen (5a, 5b) umgeben ist, welcher eine Halteanordnung für den biegsamen Deckel (6) aufweist.

8. Behältnis (20; 20a) nach Anspruch 7, **dadurch gekennzeichnet, dass** mindestens eines der folgenden Merkmale vorgesehen ist:
a) der Deckel (6; 6a) bildet einen vom Rahmen (5a, 5b) gesonderten und von ihm lösbaren Teil, wobei die Halteanordnung (5c) des Rahmens den Deckel (6; 6a) in seiner das Behältnis (20; 20a) verschliessenden Lage formschlüssig festhält;
b) der Deckel (6; 6a) weist mindestens einen Zentrierfortsatz (8) zum Eingriff in eine entsprechende Zentriervertiefung (33) des Absperrorganes (1) auf;
c) der Deckel (6) besteht aus einem unter Vakuum biegsamen Material, welches in einem steiferen Rahmen (5a, 5b) mit Hilfe einer Halteanordnung (5c) gehalten ist.

## Claims

1. A process for discharging or filling a recipient with a powdery or granular bulk material from a receiving zone (9) having a supply channel (4) at its end, at whose end, in turn, an obturating element (1; 1a), particularly a flap (1) pivotal about an axis, which is concavely, preferably with a circular shape in cross-section, vaulted towards this end is provided, which, after having a connection part (20, 20a) docked on the end of the supply channel (4), is moved for filling into an open position and afterwards into an obturating position, and which includes connection means (7) to a vacuum source (V) controlled by control means (17) to suck on a cover-like element (6, 6a) of the connection part (20, 20a) docked on to interconnect them for a movement in common, the connection part forming directly the one-sidedly open recipient (20, 20a) whose opening is docked onto the end of the supply channel, **characterised in**,
a) that an elastically flexible cover (6, 6a) is put onto the opening of the recipient (20, 20a) as a cover-like element each time before and after filling to close it , and
b) that this cover (6, 6a), in its flat condition, has a somewhat larger diameter than that which corresponds to the diameter of the vaulted obturating element (1; 1a) turned to it so that, although it is able to be moved with the latter in sucked on condition, when putting it onto the opening of the recipient (20, 20a), it is retained by the same due to its increased diameter in flat condition.

2. Process according to claim 1, **characterised in that** first the recipient (20; 20a) is docked onto the supply channel (4) by docking means (2, 3) by means of the control means (17), and that subsequently the connection means (7) of the concavely vaulted obturating element (1) is connected to the vacuum source (V) by which the cover (6) of the recipient (20; 20a) is sucked into the concave vault of the obturating element (1)
and/or
that the negative pressure produced by the vacuum source within the vaulted obturating element (1) is equalised.

3. Process according to claim 1 or 2, **characterised in that** the cover (6, 6a) is centred by means of centring means (33) on the obturating element, preferably in the form of at least one centring recess (33) for a corresponding projection (8) of the cover (6).

4. Process according to any of the preceding claims , **characterised in that** air, which emerges from the one-sidedly closed recipient (20; 20a) when filling, is discharged through an air evacuation channel (4').

5. Device for carrying out the process according to any of the preceding claims, comprising:
a) a receiving zone (9) including a supply channel (4) at its end,
b) at the end of which, in turn, an obturating element (1; 1a), particularly a flap (1) pivotal about an axis, which is concavely vaulted toward the end, is provided which may be moved for filling into an open position and afterwards into an obturating position,
c) a connection part (20, 20a) to be closed by an elastically flexible cover (6, 6a), said part being able to be docked onto the end of said supply channel (4) and to the receiving zone (9) by docking means (2, 3),
said obturating element (1, 1a) including connection means (7) to connect it to a vacuum source (V) controlled by control means (17) to suck the elastically flexible cover (6, 6a) of the connection part (20, 20a) docked on towards the concave vault of the obturating element (1, 1a), thus connecting interconnecting them for a movement in common with the latter,
d) a closure member (31) which in filling direction is located before said obturating element (1, 1a) and may be moved from a closed position into an open position and vice-versa by actuation means (15), and
e) control means (17) formed for executing a synchronised function of the above-mentioned sucking on said cover (6, 6a) of the connection part (20, 20a) docked on, the above-mentioned opening movement and said opening of said closure member (31) located before said obturating element (1, 1a).

6. Device according to claim 5, **characterised in that** at least one of the following characteristics is provided:
a) said docking means (2, 3) comprise sucking means (3) on a docking surface (3) of the end of the supply channel (4), by which a marginal area (5a, 5b) surrounding the cover (6) and connected to the recipient (20; 20a) may be fixed and oriented at the end of the supply channel (4);
b) the obturating element (1) is provided with a distributing arrangement (19) for the vacuum, preferably a grid or perforated sheet metal (19), and/or with centring means (33), preferably in the form of at least one centring recess (33) for a corresponding projection (8) of the cover (6);
c) an air evacuation channel (4') for discharging air contained in the recipient to be filled is connected to said supply channel (4), the supply channel (4) being preferably subdivided into a channel (4) for supplying bulk material and a channel (4') for evacuating air by a barrier wall (27) and/or the air evacuation channel (4') is in communication with a vacuum source, suitably also to a separator, such as a filter, which advantageously is provided with a reversible flow system that is, in particular, controllable by said control means (17).

7. Recipient (20; 20a) for a device according to claim 5 or 6 comprising at least one cover (6; 6a) to close a filling opening (21), **characterised in that** said cover (6; 6a) is elastically flexible and is, thus, adapted to be lifted from said recipient (20; 20a) under bending and shortening in a vertical position by means of a vacuum, and that said flexible cover (6; 6a) **in that** position in which it closes said recipient (20; 20a) is surrounded by a frame (5A, 5B, that is situated about in the same plane, is more rigid and in particular circular, said frame including a holding arrangement for said flexible cover (6).

8. Recipient (20; 20a) according to claim 7, **characterised in that** at least one of the following characteristics is provided:
a) the cover (6; 6a) forms a part separated from said frame (5a, 5b) and is detachable from it, the holding arrangement (5c) of the frame positively securing said cover (6; 6a) **in that** position in which it closes said recipient (20; 20a).
b) the cover (6; 6a) comprises at least one centring projection (8) for engaging a corresponding centring recess (33) of said obturating element (1);
c) the cover (6; 6a) consists of a material being flexible under vacuum that is held in a more rigid frame (5a, 5b) by means of a holding arrangement (5c).

## Revendications

1. Procédé de vidage ou de remplissage d'un récipient d'un produit en vrac pulvérulent ou granuleux 'hors d'une zone de réception (9), comprenant un conduit d'amenée (4) prévu à la fin de celle-ci, à la fin duquel de son côté un organe d'obturation (1; 1a) est prévu, particulièrement une trappe (1) pivotante autour d'un axe, qui est courbée de façon concave, préférablement en coupe d'une forme circulaire, vers la fin, et qui, après avoir accosté un élément de raccordement (20, 20a) à la fin du conduit d'amenée (4), pour le remplissage est amené dans une position ouverte et puis dans une position fermée et comprend un raccord (7) à une source de vide (V) commandée par un dispositif d'asservissement (17) pour aspirer un élément de sorte d'un couvercle (6, 6a) de l'élément de raccordement (20, 20a) accosté et ainsi les relier pour un mouvement commun, l'élément de raccordement (20, 20a) formant directement le récipient (20, 20a) d'un côté ouvert dont l'ouverture est accosté à la fin du conduit d'amenée, **caractérisé en ce**
a) que l'on met un couvercle élastiquement flexible (6, 6a) comme élément de sorte d'un couvercle sur l'ouverture du récipient (20, 20a) respectivement avant et après le remplissage pour l'obturer ainsi, et
b) que ce couvercle (6, 6a) en condition plaine possède un diamètre un peu plus grand que corresponde au diamètre de l'organe d'obturation (1; 1a) courbé tourné vers il même de façon qu'il peut être mû avec celui-ci en condition aspirée, mais, quand il est mis à l'ouverture du récipient (20, 20a), qu'il est arrêté par celui-ci en vertu de son diamètre en condition plaine agrandis.

2. Procédé selon la revendication 1, **caractérisé en ce que** tout d'abord le récipient (20; 20a) est accosté au conduit d'amenée (4) par le dispositif d'accostage (2, 3) à l'aide du dispositif d'asservissement (17), et que l'on met en communication après le raccord (7) de l'organe d'obturation (1) courbé de façon concave avec la source de vide (V) en aspirant ainsi le couvercle (6) du récipient (20; 20a) dans la courbure concave de l'organe d'obturation (1)
et/ou
que la dépression produite par la source de vide dans l'organe d'obturation (1) courbé est égalisée.

3. Procédé selon la revendication 1 ou 2, **caractérisé en ce que** le couvercle (6, 6a) est centré à l'organe d'obturation à l'aide d'un dispositif de centrage (33), préférablement en forme d'au moins un creusement de centrage (33) pour un prolongement (8) correspondant du couvercle (6).

4. Procédé selon une quelconque des revendications précédentes **caractérisé en ce que** l'on enlève l'air émergeant du récipient (20; 20a) d'un côté fermé pendant le remplissage à travers un conduit d'évacuation d'air (4').

5. Dispositif pour l'exécution du procédé selon une quelconque des revendications précédentes, qui comprend:
a) une zone de réception (9) incluant un conduit d'amenée (4) prévu à la fin,
b) à la fin duquel de son côté un organe d'obturation (1; 1a) est prévu, particulièrement une trappe (1) pivotante autour d'un axe, qui est courbée de façon concave, préférablement en coupe d'une forme circulaire, vers la fin, et qui peut être amené dans une position ouverte pour le remplissage et puis dans une position fermée,
c) un élément de raccordement (20, 20a), qui peut être fermé par un couvercle élastiquement flexible (6, 6a), qui peut être accosté à la zone de réception (9) au moyens d'un dispositif d'accostage (2, 3) à la fin du conduit d'amenée (4),
l'organe d'obturation (1; 1a) comprenant un raccord (7) à une source de vide (V) commandée par un dispositif d'asservissement (17) pour aspirer un élément de sorte d'un couvercle (6, 6a) de l'élément de raccordement (20, 20a) accosté et ainsi les relier pour un mouvement commun,
d) un élément de fermeture (31), particulièrement de forme conique, situé avant l'organe d'obturation (1; 1a) vue en direction de remplissage, qui peut mis d'une position de fermeture dans une position d'ouverte et vice-versa à l'aide d'un dispositif de commande (15), et
e) un dispositif d'asservissement (17) formé pour une fonction synchronisée de ladite aspiration du couvercle (6, 6a) de l'élément de raccordement (20, 20a) accosté et dudit mouvement d'ouverture et de l'ouverture de l'élément de fermeture (31) situé avant l'organe d'obturation (1; 1a).

6. Dispositif selon la revendication 5, **caractérisé en ce que** l'on prévoit au moins une des caractéristiques suivantes:
a) le dispositif d'accostage (2, 3) comprend un dispositif d'aspiration (3) à une surface d'accostage (3) de la fin du conduit d'amenée (4), par lequel une zone marginale (5a, 5b) reliée au récipient (20; 20a) et entourant le couvercle (6) à la fin du conduit d'amenée (4) peut être fixée et orientée;
b) l'organe d'obturation (1) est prévu d'un arrangement de distribution (19) pour le vide, de préférence une grille ou une tôle perforée (19), et/ou d'un dispositif de centrage (33), préférablement en forme d'au moins un creusement de centrage (33) pour un prolongement (8) correspondant du couvercle (6);
c) un conduit d'évacuation d'air (4') pour évacuer l'air contenu dans le récipient à remplir est relié au conduit d'amenée (4), le conduit d'amenée (4) étant, de préférence, divisé par une paroi de blocage en des conduits (4', 4") pour l'amenée du produit en vrac et pour l'évacuation d'air, et/ou le conduit d'évacuation d'air (4') est en communication avec une source de vide, convenablement aussi à un séparateur, comme un filtre, qui avantageusement est prévu d'un système de contre-courant, qui peut être en particulier commandé par le dispositif d'asservissement (17).

7. Récipient (20; 20a) pour un dispositif selon la revendication 5 ou 6, comprenant au moins un couvercle (6; 6a) fermer une ouverture de remplissage (21), **caractérisé en ce que** le couvercle (6; 6a) est formé de façon élastiquement flexible, de manière qu'il peut être soulevé du récipient (20; 20a) au moyens de vide en s'infléchissant et se raccourcissant en projection vertical, et que le couvercle flexible (6; 6a) dans sa position fermante le récipient (20; 20a) est entouré par un cadre (5a, 5b) plus rigide, et en particulier annulaire, situé à peu près dans le même plan, qui présente une disposition de retenue pour le couvercle flexible (6).

8. Récipient (20; 20a) selon la revendication 7, **caractérisé en ce qu'**au moins une des caractéristiques suivantes est prévue:
a) le couvercle (6; 6a) forme un part séparé du cadre (5a, 5b) et détachable de celui-ci, le disposition de retenue (5c) du cadre retenant le couvercle (6; 6a) de manière positive dans sa position, dans laquelle il ferme le récipient (20; 20a);
b) le couvercle (6; 6a) comprend au moins un prolongement de centrage (8) pour l'engrènement dans un creusement de centrage (33) correspondant de l'organe d'obturation (1);
c) le couvercle (6; 6a) consiste d'un matériau flexible sous le vide, qui est retenu dans un cadre plus rigide (5a, 5b) à l'aide d'une disposition de retenue (5c).
